# EUROPÄISCHE PATENTSCHRIFT

(11) **EP 0 683 393 B1**
(45) Veröffentlichungstag und Bekanntmachung des Hinweises auf die Patenterteilung: **01.10.1997**
(21) Anmeldenummer: 95107743.7
(22) Anmeldetag: 19.05.1995
(51) Int. Cl.: G01N 27/72

(54) **Verfahren zur zerstörungsfreien Werkstoffprüfung**
Method for non-destructive examination of materials
Procédé pour l'examen non-destructif de matériaux

(30) Priorität: 20.05.1994 DE 4417655
(43) Veröffentlichungstag der Anmeldung: 22.11.1995
(73) Patentinhaber: Fraunhofer-Gesellschaft zur Förderung der angewandten Forschung e.V., 80636 München (DE)
(72) Erfinder: Kern, Rolf, Dr., D-66571 Dirmingen (DE); Dobmann, Gerd, Dr., D-66125 Dudweiler (DE); Altpeter, Iris, Dr., D-66123 Saarbrücken (DE); Theiner, Werner Alfred, Dr., D-66123 Saarbrücken (DE)

(56) Entgegenhaltungen:
- DE-A- 2 746 477
- DE-A- 4 343 225
- DE-C- 2 837 733
- US-A- 3 427 872
- MECANIQUE MATERIAUX ELECTRICITE, Nr. 400, Juni 1983 PARIS FR, Seiten 3-19, C. FLAMBARD ET AL.

## Beschreibung

Die Erfindung betrifft ein Verfahren zur zerstörungsfreien Werkstoffprüfung unter Anwendung des magnetischen Barkhausenrauschen. Ein derartiges Verfahren ist z.B. aus der DE 28 37 733 C1 bekannt oder in der am 7.7.94 publizierten DE 43 43 225 A1 beschrieben. Weitere Literatur : Gartner G., Stücker E., Thiele D.: Emagtronic, ein mobiler Meßplatz zur Lokalisierung spannungsrißkorrosionsgefährdeter Niederdruckturbinenschaufeln, VDI-Berichte Nr. 679 (1988) 47, Kern R., Theiner W.A., Bergmann H.W., Müller D., Damaschek R., Rudlaff T. und Bloehs W.: Zerstörungsfreie Bestimmung der Einhärtungstiefe nach dem Randschichthärten mit Hilfe mikromagnetischer Prüfverfahren am Beispiel des Laserstrahlhärtens, 49. Härtereikolloquium 1993, Härtereitechnische-Mitteilungen, HTM 49 (1994), Seite 222, und Altpeter I.: Spannungsmessung und Zementitgehaltsbestimmung in Eisenwerkstoffen mittels dynamischer magnetischer und magnetoelastischer Meßgrößen, Dissertation 1990, Saarbrücken.

Mit Hilfe dieses Verfahrens soll die Zusammensetzung des Werkstoffes und insbesondere der Anteil des Zementit in Fe-C-Stahl und weißem Gußeisen unterschiedlicher Legierungsgehalte ermittelt werden.

Mößbauerspektrometrisch und röntgenographisch (Altpeter 1.) lassen sich die Zusammensetzungsverhältnisse dieser Werkstoffe gut untersuchen. Nachteilig ist jedoch der umständliche und sehr zeitaufwendige Versuchsumfang von mehreren Stunden bzw. Tagen für eine Probe.

Aufgabe der Erfindung ist es, ein einfaches und schnelles Verfahren zur Untersuchung von Fe-C-Stahl und weißem Gußeisen auf der Basis des magnetischen Barkhausenrauschen anzugeben, wobei die Barkhausenrauschamplitude M_{Max} an einer Werkstoffprobe gemessen wird.

Erfindungsgemäß wird dies durch die Verfahren nach Anspruch 1 und 2 gelöst. Vorteilhafte Ausgestaltungen der beiden Verfahren sind in den Unteransprüchen gekennzeichnet.

Erfindungsgemäß ist erkannt worden, daß durch die einfache Bestimmung mit Hilfe von Messungen des magnetischen Barkhausenrauschen der Zementitanteil und die damit verbundenen thermisch induzierten Eigenspannungen 2-ter Art in Fe-C-Stahl sowie in weißem Gußeisen ermittelt werden können.

Thermisch bedingte Eigenspannungen im mikroskopischen Bereich entstehen bei Temperaturänderungen in mehrphasigen Werkstoffen, deren Phasen unterschiedliche thermische Ausdehnungskoeffizienten besitzen. Aufgrund der deutlich kleineren thermischen Ausdehnung von Zementit gegenüber Ferrit ist in allen Stählen und weißem Gußeisen unterhalb der Curietemperatur der Zementitphase mit thermoelastischen Eigenspannungen zu rechnen. Nach röntgenographischen Eigenspannungsmessungen liegen bei Raumtemperatur in der Ferritphase Zugeigenspannungen und in der Zementitphase Druckeigenspannungen vor.

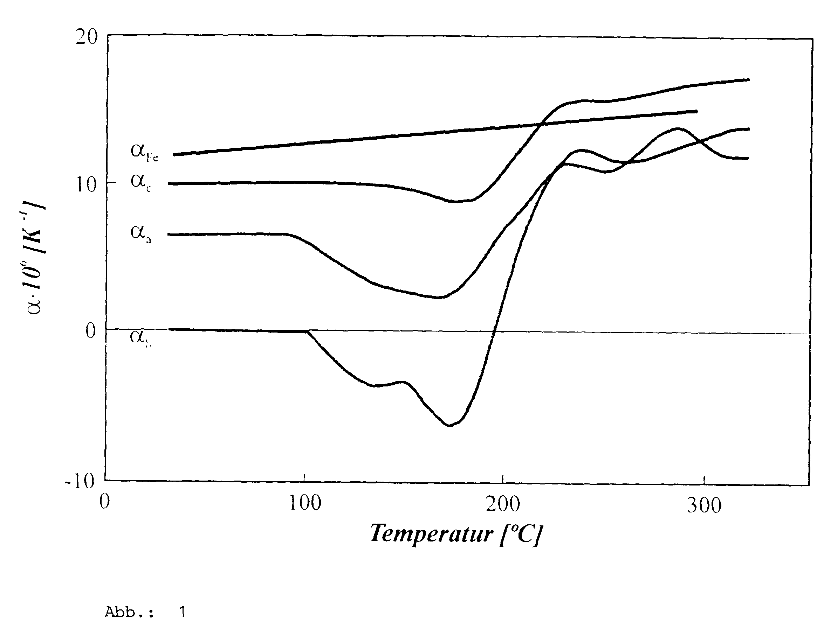

Oberhalb der Curietemperatur sind die thermischen Ausdehnungskoeffizienten von Zementit für die drei kristallographischen Richtungen a, b und c ähnlich und in der Größenordnung desjenigen für reines Eisen. Unterhalb der Curietemperatur zeigen die thermischen Ausdehnungskoeffizienten von Zementit nach Abb. 1 eine stark ausgebildete Anisotropie und unterscheiden sich deutlich von demjenigen des Eisen (Hartmann, S.: Thermoelastische Eigenspannungen in weißem Gußeisen, Dissertation (1994)). Mit fallender Temperatur durchläuft der thermische Ausdehnungskoeffizient von Zementit unterhalb der Curietemperatur ein Minimum. Diese Ausdehnungsanomalie ist auf die Magnetostriktion zurückzuführen, die bei Zementit negative Werte annimmt. Aufgrund dieser Ausdehnungsanomalie sind die stärksten Eigenspannungsänderungen unterhalb der Curietemperatur zu erwarten. Nach theoretischen Modellrechnungen von Berveiller (private Mitteilung von Berveiller) sind die thermischen Eigenspannungen 2-ter Art für die Ferritphase um so größer, je höher der Zementitgehalt der Probe ist. Sie nehmen mit steigender Temperatur ab und zwar um so stärker, je höher der Zementitgehalt der Probe ist.

Aufbauend auf dem Stand der Technik ist das magnetische Barkhausenrauschen als besonders geeignete Prüftechnik anzusehen, um die phasenspezifischen Eigenspannungen 2-ter Art in Fe-C-Stahl und weißem Gußeisen zu ermitteln. Um Informationen über die phasenspezifischen, thermisch induzierten Eigenspannungen zu erhalten, wird der Sachverhalt genutzt, daß bei diesem Werkstoff beim magnetischen Barkhausenrauschen als Funktion der tangentialen Magnetfeldstärke Strukturen in der Barkhausenrausch-Profilkurve auftreten, die phasenspezifischen Beiträgen zuzuschreiben sind. Meist wird eine Doppelhöckerstruktur beobachtet, wobei ein bei kleinerer Magnet-Feldstärke auftretender, amplitudenmäßig größerer Rauschbeitrag M_{MAX1} der reinen Ferritphase zuzuordnen ist, während ein kleinerer, meist nur als Schulter von M_{MAX1} ausgebildeter Rauschbeitrag M_{MAX2} durch Ummagnetisierungsprozesse hervorgerufen wird, die von der Zementitphase beeinflußt sind. Analysiert wurde bislang ausschließlich der der reinen Ferritphase zuzuordnende Rauschbeitrag M_{MAX1}, über den Zugang zu den thermisch induzierten Eigenspannungen in der Ferritphase gefunden werden kann.

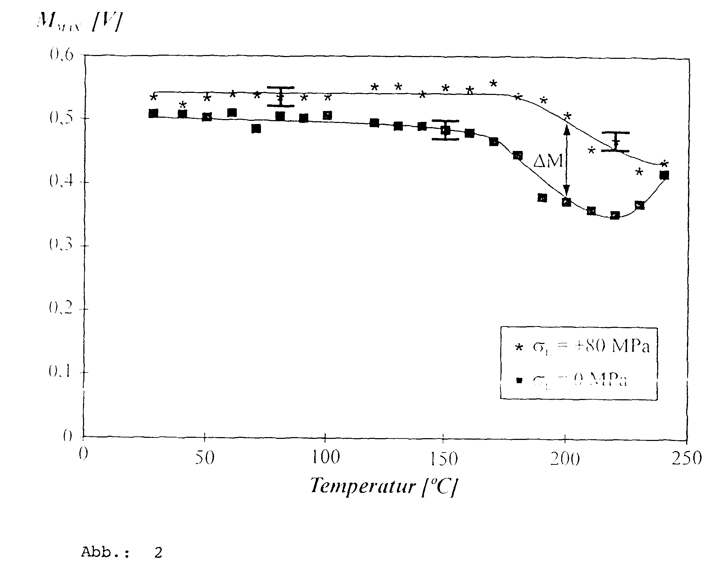

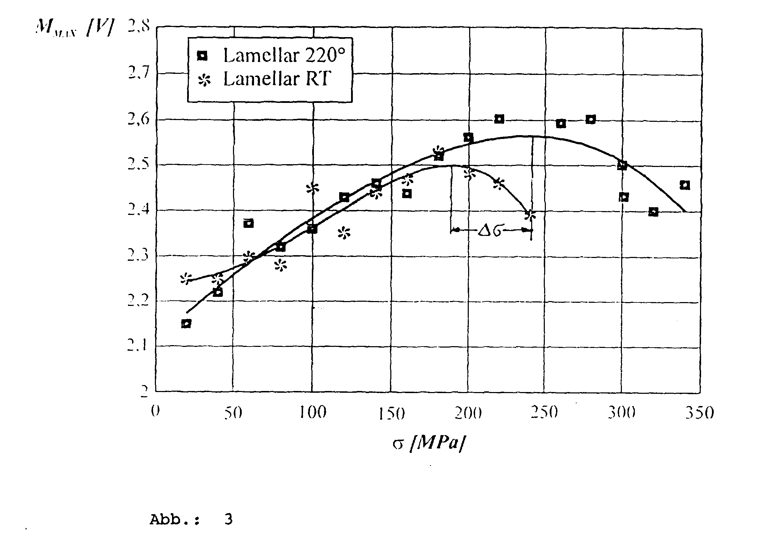

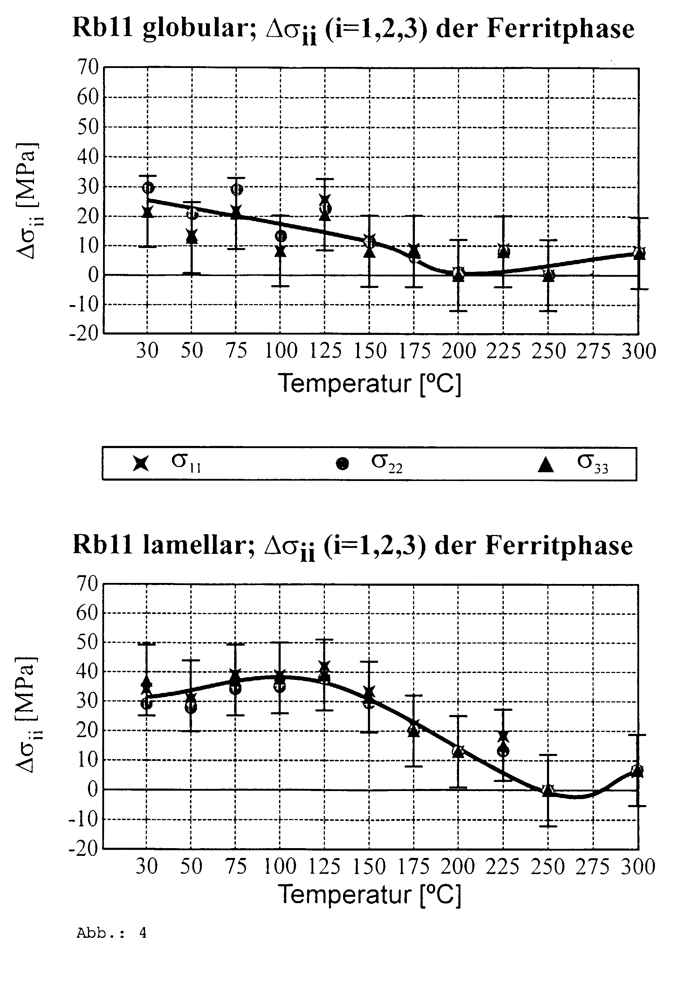

Basierend auf dem Interpretationsmodell, nach welchem die Eigenspannungen 2-ter Art mit steigender Temperatur abgebaut werden und damit die Blochwandbeweglichkeit und auch die Sensitivität bzgl. Lastspannungen wächst, wurde ein Prüfkonzept zur Ermittlung von Eigenspannungen 2-ter Art ermittelt. Folgende experimentelle Ergebnisse haben zur Entwicklung dieses Interpretationsmodells beigetragen:
- Das Maximum der Barkhausenrausch-Amplitude von Weicheisen als reine Ferritphase bleibt mit steigender Temperatur zumindest bis zu Temperaturen von 250°C konstant. In Stählen (Zweiphasenwerkstoffe) dagegen nimmt M_{MAX1} mit steigender Temperatur ab und durchläuft ein Minimum bei einer für den betreffenden Stahl charakteristischen Temperatur. Die Abnahme ist um so größer, je höher der Volumenanteil an Zementit im Stahl ist. Bei Raumtemperatur steigt M_{MAX1} mit steigendem Zementitgehalt.
- Geht man davon aus, daß lediglich die Ferritphase auf Spannungen reagiert und auch nur diese zum ausgewerteten Barkhausenrausch-Signal (M_{MAX1} im weiteren nur M_{MAX} genannt) beiträgt, so gehen obengenannte Meßeffekte konform mit dem nach Berveiller theoretisch ermittelten Eigenspannungsverhalten in Stählen als Funktion des Zementitgehaltes und der Temperatur.
- Ein weiteres Meßergebnis, welches das Interpretationsmodell stützt, ist die Zunahme der Lastspannungsempfindlichkeit mit steigender Prüftemperatur. Abb. 2 verdeutlicht dies anhand der Probe RB11, die einen Kohlenstoffstahl mit einem Zementitgehalt von 14,6 Vol.% Fe₃C repräsentiert: In der Abb. 2 ist M_{MAX} als Funktion der Temperatur für zwei unterschiedliche Belastungszustände (σ₁ = 0 MPa, σ₂ = + 80MPa) aufgetragen. Der Abstand zwischen beiden Meßkurven wächst mit der Prüftemperatur, gleichbedeutend mit einer Zunahme der Lastspannungsempfindlichkeit mit steigender Meßtemperatur. Die Zunahme der Lastspannungsempfindlichkeit ist auf einen Abbau der thermisch induzierten Eigenspannungen 2-ter Art zurückzuführen.
- In einem dritten Experiment wurde die Prüfgröße M_{MAX} für die gleiche Stahlgüte RB11 als Funktion von Zuglastspannungen sowohl bei Raumtemperatur (RT) als auch bei T = 220° C gemessen. Hierbei zeigt sich, daß bei beiden Prüftemperaturen M_{MAX} als Funktion der Last zunächst ansteigt und bei einer gewissen Lastspannung ein Maximum durchläuft. Im Unterschied zur Raumtemperatur wird das Maximum in der M_{MAX}(σ)-Kurve bei 220°C erst bei einer höheren Lastspannung erreicht. Bei Raumtemperatur wird der maximale Wert bei 190MPa, bei 220°C dagegen erst bei 240MPa durchlaufen (Abb. 3). Diese Verschiebung erklärt sich aus dem Abbau der thermisch induzierten Zugeigenspannungen σ₊ der Ferritphase von 50MPa, da zum Erreichen des Maximums der M_{MAX}(σ)-Kurve der ausgefallene Beitrag der Spannungen 2-ter Art zusätzlich aufgebracht werden muß. Nach röntgenographischen Eigenspannungsmessungen liegen die thermisch induzierten Eigenspannungen der Ferritphase in dieser Größenordnung (siehe Abb.4).

Wie oben beschrieben, ist die Curietemperatur der Zementitphase eine entscheidene Werkstoffkenngröße dafür, bei welcher Temperatur thermisch induzierte Eigenspannungen 2-ter Art für einen bestimmten Stahl abgebaut werden. Für reinen Zementit liegt die Curietemperatur nach Literaturangaben bei ca 210°C. Fe-C-Stähle enthalten im allgemeinen eine Reihe unterschiedlicher Legierungselemente, wobei insbesondere Chrom und Mangan wegen Affinität zu Kohlenstoff abhängig von der Wärmebehandlung des Stahls in den Zementit eindiffundieren und abhängig vom erreichten Legierungsgehalt die Curietemperatur der Zementitphase herabsetzen.

Die Curietemperatur von Zementit kann folglich über einen weiten Bereich variieren, was durch vergleichende mößbauerspektroskopische Untersuchungen bestätigt wurde. Die erfindungsgemäße Messung des Barkhausenrauschens als Funktion der Temperatur hat ergeben, daß die Rausch-Amplitude M_{MAX1} für einen bestimmten Stahl ein Minimum bei einer Temperatur annimmt, die der mößbauerspektroskopisch bestimmten Curietemperatur der betreffenden Zementitphase entspricht. Hieraus ist abzuleiten, daß die Temperaturabhängigkeit des Barkhausenrauschens neben der Bestimmung der thermischen Eigenspannungen auch zur Ermittlung der Curietemperatur der Zementitphase eingesetzt werden kann.

Aus diesen Meßergebnissen leitet sich ein Prüfkonzept zur Bestimmung der thermisch induzierten Spannungen 2-ter Art ab, bestehend aus 2 Prüfschritten:
- Im ersten Schritt wird die Probe bis über die Curietemperatur der jeweiligen Zementitphase hinaus erwärmt und M_{MAX} als Funktion der Werkstücktemperatur gemessen. Die Curietemperatur ist in der M_{MAX}(T) - Kurve durch ein Minimum gekennzeichnet (Abb. 2).
- In einem zweiten Schritt werden bei T = T_{CURIE} Zuglastspannungen auf die Probe gegeben, solange bis der M_{MAX}-Wert auf den Ausgangswert bei Raumtemperatur angestiegen ist. Dieser Lastspannungswert entspricht dann demjenigen der Eigenspannungen 2-ter Art.

### Ausführungsbeispiel:

Die Abbildungen zeigen:
Abb. 1: Thermische Ausdehnungskoeffizienten von Zementit als Funktion der Temperatur für kristallographische Richtungen a, b und c,
Abb. 2: Barkhausenrausch-Amplitude M_{MAX} als Funktion der Temperatur bei zwei unterschiedlichen Belastungszuständen σ₁ = 0 MPa und σ₂ = 80 MPa für einen Kohlenstoffstahl mit 14.6 Vol.% Fe₃C,
Abb. 3: Barkhausenrausch-Amplitude M_{MAX} als Funktion einer aufgebrachten Lastspannung für zwei Probentemperaturen (Raumtemperatur und 220°C,
Abb. 4: Röntgenographisch bestimmte thermisch induzierte Eigenspannungen für obigen Fe-C-Stahl mit 14 Vol.% Fe₃C,

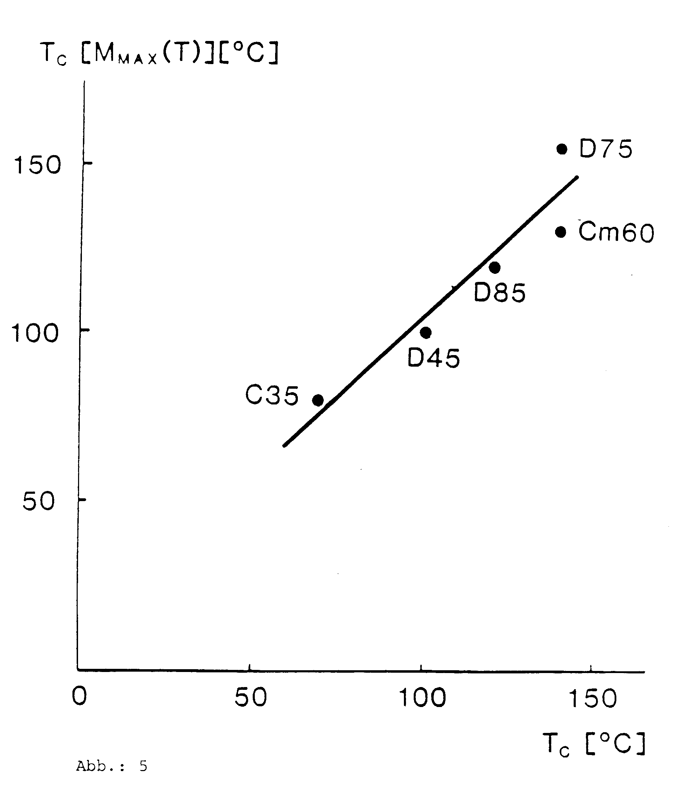

Abb. 5: Aus der M_{MAX}(T) - Kurve bestimmte Curietemperatur der Zementitphase im Vergleich zum mößbauerspektroskopisch bestimmten T_{c}-Wert für einige Kohlenstoffstähle.

Bei den Messungen erfolgt die Aufnahme der Meßdaten des magnetischen Barkhausenrauschens mit einem labormäßigen Aufbau. Die Stahlprobe, ein zylindrischer Stab mit Länge 160 mm und ⌀ 8 mm, wird in einem kleinen Cu-Ofen aufgeheizt, der zwischen den Polen eines Elektromagneten angeordnet ist. Die mit Gewinde versehene Probe ist gleichzeitig in einer Zugvorrichtung gehaltert, über die definiert Druck- oder Zugspannungen auf den Stab aufgebracht werden können.

Die Probe wird zunächst ohne Last aufgeheizt. Mit Erreichen einer gewünschten Meßtemperatur wird die Temperatur konstant gehalten und die mechanische Spannung schrittweise in Intervallen von 0 - mehreren 100 MPa aufgebracht und die zugehörige Barkhausenrauschkurve M(H) als Funktion der tangentialen Magnetfeldstärke aufgezeichnet, aus der bei der späteren Auswertung das Maximum der Mₘₐₓ (σ)-Kurve ermittelt werden kann. Danach kann die Probe entlastet werden, weiter aufgeheizt und dieser Vorgang bei einer anderen oder mehreren anderen Meßtemperaturen wiederholt werden.

Im ersten Prüfschritt erfolgt ein Aufheizen der Probe bis über die Curietemperatur der Zementitphase T_{c} des betreffenden Stahls. Gleichzeitig erfolgt die Aufnahme des magnetischen Barkhausenrauschens der Ferritphase als Funktion der Temperatur. Die Amplitude des Barkhausenrauschen Mₘₐₓ zeigt ein Minimum bei T_{c}. Die Abnahme der Rauschamplitude, d.h. die Differenz ΔM der Amplituden bei Raumtemperatur und bei der Curie-Temperatur von Eisenkohlenstoffstahl hat ihre Ursache im Abbau der thermischen Eigenspannungen 2-ter Art in der Ferritphase. Die Temperatur, bei der die thermisch induzierten Spannungen in der Ferrit- und Zementitphase abgebaut sind, ist die Curie-Temperatur von Zementit. Der Differenzbetrag AM hängt ab vom Betrag der Eigenspannungen 2-ter Art. Diese wiederum sind abhängig vom Volumenanteil der beiden Phasen, d.h. vom Zementitgehalt des betreffenden Stahls.

In der Rauschamplitude Mₘₐₓ bilden sich Spannungsänderungen in der Probe ab, die 1-ter Art (z.B. Lastspannungen) oder 2-ter Art (thermisch induzierte Spannungen) oder eine Überlagerung beider sein können. Im allgemeinen nimmt Mₘₐₓ mit zunehmender Spannung σ_{L} zu und durchläuft bei einer gewissen Spannung einen Maximalwert. Durch Aufbringen einer Zuglastspannung auf die Probe im zweiten Prüfschritt findet bei Fe-C-Stählen eine Überlagerung mit den Eigenspannungen 2-ter Art (in der Ferritphase sind dies ebenfalls Zugspannungen) statt. Je nachdem, bei welcher Temperatur die Messung ausgeführt wird, ist der Betrag der thermoelastischen Spannung unterschiedlich. D.h., bei Raumtemperatur hat man mit einem höheren Eigenspannungsbetrag als bei höheren Temperaturen zu rechnen, bei der Curie-Temperatur der Zementitphase sind diese Spannungen abgebaut. Im Lastspannungsverhalten von Mₘₐₓ muß sich dieser Unterschied abbilden, wie in Abb. 3 für zwei Meßtemperaturen (Raumtemperatur RT und 220°( der Curie-Temperatur der Zementitphase)) dargestellt. Der Unterschied besteht darin, daß die Lastspannung, die zum Erreichen des Maximums in der Mₘₐₓ (σ)-Kurve notwendig ist, bei der Meßtemperatur T_{c} um einen Betrag Δσ größer sein muß. Dieser Wert entspricht genau dem Betrag der thermisch induzierten Spannung 2-ter Art in der Ferritphase.

Als Variante zum zweiten Prüfschritt kann auch von dem in Abb. 2 skizzierten Mₘₐₓ-Verlauf als Funktion der Temperatur ausgegangen werden. Nimmt man Mₘₐₓ ohne Lastspannung als Funktion der Temperatur auf, so kann nach Erreichen der Curie-Temperatur von Zementit durch Aufbringen einer Last bei konstant gehaltener Curie-Temperatur die Mₘₐₓ-Amplitude solange erhöht werden, bis der Ausgangswert bei Raumtemperatur wieder erreicht wird. Die dazu notwendige Lastspannung σ_{L} entspricht dann dem in Abb. 3 dargestellten Wert Δσ.

Die Koerzitivfeldstärke H_{cM} ,eine mikromagnetische Prüfgröße, kann zusätzlich simultan mit den Mₘₐₓ(σ,T)-Verläufen über der Temperatur bei verschiedenen Lasten aufgenommen werden. Bei allen Zuständen ergeben sich charakteristische Änderungen. Auch für die Koerzitivfeldstärke wird ein signifikanter Unterschied zwischen lamellaren und globularen Zuständen festgestellt. Während bei lamellarer Gefügeausbildung im H_{cM}(σ,T)-Verlauf ein ausgeprägtes Minimum auftritt, ist dieses Minimum bei globularen Zuständen sehr schwach ausgebildet.

Mit Hilfe der Erfindung ist eine Bestimmung der Curie-Temperatur der Zementitphase aus dem Minimum der M_{MAX}(T) -Kurve für Kohlenstoffstähle sowie weißes Gußeisen unterschiedlicher Legierungsgehalte möglich, sowie die Ermittlung thermisch induzierter Eigenspannungen 2-ter Art durch Messen der M_{MAX}(σ) - Kurve bei Raumtemperatur und T = T_{c} und Bestimmung der Verschiebung des Maximums der M_{MAX}(σ) - Kurve um einen Spannungsbetrag Δσ, der dem Betrag der thermisch induzierten Eigenspannungen entspricht.

Thermisch induzierte Spannungen 2-ter Art können durch Belasten der Probe bei T = T_{c} solange bis der M_{MAX} - Wert auf den Ausgangswert bei Raumtemperatur angestiegen ist, ermittelt werden. Der dazu erforderliche Spannungsbetrag entspricht ebenfalls den Spannungen 2-ter Art.

Letztendlich kann der Zementitgehalt aus den M_{MAX}(T) - Kurven nach der Meßvorschrift (M_{MAX}(RT) - M_{MAX}(T≥T_{c}))/M_{MAX}(RT) bestimmt werden.

Diese Zementitgehaltsbestimmung geht konform mit der Bestimmung der thermisch induzierten Eigenspannungen, da sich die Eigenspannungen mit dem Zementitgehalt systematisch ändern. Mit steigendem Zementitgehalt nehmen die Eigenspannungen 2-ter Art in der Ferritphase zu.

## Patentansprüche

1. Verfahren zur zerstörungsfreien Werkstoffprüfung von Fe-C-Stahl und Gußeisen unterschiedlicher Legierungsgehalte unter Anwendung des magnetischen Barkhausenrauschen mit Messung der Barkhausenrauschamplitude M_{Max} an einer Werkstoffprobe,
**dadurch gekennzeichnet,**
daß die Probe bis über die Curie-Temperatur der Zementitphase erwärmt wird und M_{Max} in Abhängigkeit von der Probentemperatur gemessen wird und die Curietemperatur durch Ermittlung des Minimums der M_{Max} -Kurve bestimmt wird,
und zur Ermittlung thermisch induzierter Eigenspannungen 2-ter Art
die Probe unter Beibehaltung der Curie-Temperatur mit Druck- oder Zuglastspannungen solange beaufschlagt wird, bis der M_{Max} -Wert bei Raumtemperatur ohne Lastspannung erreicht wird, wobei die dazuerforderliche Druck- oder Zuglastspannung dem Betrag der thermisch induzierten Eigenspannungen entspricht.

2. Verfahren zur zerstörungsfreien Werkstoffprüfung von Fe-C-Stahl und Gußeisen unterschiedlicher Legierungsgehalte unter Anwendung des magnetischen Barkhausenrauschen mit Messung der Barkhausenrauschamplitude M_{Max} an einer Werkstoffprobe,
**dadurch gekennzeichnet,**
daß die Probe bis über die Curie-Temperatur der Zementitphase erwärmt wird und M_{Max} in Abhängigkeit von der Probentemperatur gemessen wird und die Curietemperatur durch Ermittlung des Minimums der M_{Max} -Kurve bestimmt wird,
und zur Ermittlung thermisch induzierter Eigenspannungen 2-ter Art M_{Max} (σ) bei Raumtemperatur (RT) und bei der Curie-Temperatur T_{c} gemessen wird und die Differenz bzw. Verschiebung der beiden Maxima der Kurven bestimmt wird, wobei dieser Spannungsbetrag Δσ dem Betrag der thermisch induzierten Eigenspannungen entspricht.

3. Verfahren nach Anspruch 1 oder 2,
**dadurch gekennzeichnet,**
daß der Zementitgehalt der Probe aus den M_{MAX}(T) - Kurven nach der Meßvorschrift (M_{MAX}(RT) - M_{MAX}(T≥T_{c}))/M_{MAX}(RT) bestimmt wird.

## Claims

1. Method of non-destructive materials testing of Fe-C steel and cast iron containing alloying constituents in different percentages, employing the magnetic Barkhausen noise with measurement of the Barkhausen noise amplitude M_{MAX} on a material specimen,
**characterised in**
that the specimen is heated to a temperature level above the Curie point of the cementite phase and M_{MAX} is determined as a function of the specimen temperature, and that the Curie point is determined by determination of the minimum of the M_{MAX} curve,
and that for determination of thermally induced internal stress of the second order the specimen is subjected to compressive or tensile load stress, while it is maintained at the level of the Curie point, until the M_{MAX} value at room temperature without load stress is reached, with the compressive or tensile load stress required to this end corresponding to the amount of the thermally induced internal stress.

2. Method of non-destructive material testing of Fe-C steel and cast iron containing alloying constituents in different percentages, employing the magnetic Barkhausen noise with measurement of the Barkhausen noise amplitude M_{MAX} on a material specimen,
**characterised in**
that the specimen is heated to a temperature level above the Curie point of the cementite phase and M_{MAX} is determined as a function of the specimen temperature, and that the Curie point is determined by determination of the minimum of the M_{MAX} curve,
and that for determination of thermally induced internal stress of the second order M_{MAX}(σ) is measured at room temperature (RT) and at the Curie point T_{c} and that the difference or shift, respectively, of the two maximums of the curves is determined, with this amount of stress Δσ corresponding to the amount of the thermally induced internal stress.

3. Method according to Claim 1 or 2,
**characterised in**
that the cementite percentage in the specimen is determined by derivation from the M_{MAX} (T) curves in compliance with the measuring rule (M_{MAX} (RT) - M_{MAX} (T≥T_{c}))/M_{MAX}(RT).

## Revendications

1. Procédé d'essai non destructif d'acier Fe-C et de fonte de moulage blanche, qui contiennent des constituants d'alliage aux pourcentages différents, par l'emploi du bruit magnétique de Barkhausen à mesurage de l'amplitude du bruit de Barkhausen M_{MAX} sur une éprouvette de la matière première,
**caractérisé en ce**
que ladite éprouvette est chauffé à un niveau de température au-dessus du point de Curie de la phase de cémentite, et que M_{MAX} est déterminé en fonction de la température de l'éprouvette, et en ce que le point de Curie est établi par détermination du minimum de la courbe M_{MAX},
et en ce que, pour la détermination des contraintes internes du deuxième ordre, thermiquement induites, ladite éprouvette est soumise à une contrainte en charge de compression ou de traction, pendant qu'elle est tenue au niveau du point de Curie point, jusqu'à la valeur M_{MAX} à température ambiante, sans contrainte en charge, soit atteinte, ladite contrainte en charge de compression ou de traction, qui est requise à cette fin, correspondant au montant des contraintes internes thermiquement induites.

2. Procédé d'essai non destructif d'acier Fe-C et de fonte de moulage blanche, qui contiennent des constituants d'alliage aux pourcentages différents, par l'emploi du bruit magnétique de Barkhausen à mesurage de l'amplitude du bruit de Barkhausen M_{MAX} sur une éprouvette de la matière première,
**caractérisé en ce**
que ladite éprouvette est chauffé à un niveau de température au-dessus du point de Curie de la phase de cémentite, et que M_{MAX} est déterminé en fonction de la température de l'éprouvette, et en ce que le point de Curie est établi par détermination du minimum de la courbe M_{MAX},
et en ce que, pour la détermination des contraintes internes du deuxième ordre, thermiquement induites, on mesure M_{MAX}(σ) à température ambiante (RT) et au point de Curie T_{c}, en déterminant la différence ou respectivement le décalage des deux maximums des courbes, ce montant de tension Δσ correspondant aux contraintes internes thermiquement induites.

3. Procédé selon la revendication 1 ou 2,
**caractérisé en ce**
que le pourcentage de la cémentite dans l'éprouvette est détermination par dérivée des courbes M_{MAX} (T) en correspondance avec la règle de mesure (M_{MAX} (RT) - M_{MAX}(T≥T_{c}))/M_{MAX}(RT).
